# EUROPEAN PATENT SPECIFICATION

(11) **EP 4 527 482 B1**
(45) Date of publication and mention of the grant of the patent: **13.05.2026**
(21) Application number: 24211771.1
(22) Date of filing: 22.03.2021
(51) Int. Cl.: B01D 29/19, B01D 35/143, F24H 1/20, F24H 9/20, B01D 29/15, B01D 29/60, F24H 15/132, C02F 5/00, C02F 1/00, B01D 35/06, F24H 9/00, F24H 15/215, F24H 15/219, F24H 15/238

(54) **FILTER ELEMENT ASSEMBLY, FILTER, WATER PATH CONTROL SYSTEM, AND WATER HEATER**
FILTERELEMENTANORDNUNG, FILTER, WASSERWEGSTEUERUNGSSYSTEM UND WASSERERHITZER
ENSEMBLE ÉLÉMENT FILTRANT, FILTRE, SYSTÈME DE COMMANDE DE TRAJET D'EAU ET CHAUFFE-EAU

(30) Priority: 21.03.2020 CN 202010212501; 21.03.2020 CN 202010212129
(43) Date of publication of application: 26.03.2025
(62) Divisional of application: 21776990.0
(73) Proprietor: Wuhu Midea Kitchen and Bath Appliances Mfg. Co., Ltd., Wuhu, Anhui 241009 (CN)
(72) Inventor: Zhao, Renzhuang, Anhui, 241009 (CN); WANG, Ming, 241009, Anhui (CN)
(74) Representative: RGTH

(56) References cited:
- EP-A1- 2 735 353
- WO-A2-2016/107751
- CN-U- 210 125 225
- US-A1- 2018 147 510
- US-A1- 2020 061 501
- US-B1- 6 377 171
- US-B2- 6 936 160

## Description

### CROSS-REFERENCE TO RELATED APPLICATIONS

### TECHNICAL FIELD

The present disclosure relates to the technical field of filtering devices, and in particular, to a filter element assembly, a filter and a water heater.

### BACKGROUND

The filter element frame, as a component in the filter, is mainly used to support the filter screen on the outer surface. There are many permeable holes on the filter element frame, raw water passing through the filter screen can flow into the inner cavity of the filter element frame through the permeable holes, and then flow out from the water outlet at an end of the filter element frame.

Compared with the filter whose water inlet and water outlet are provided at the same end, in the related art, the permeable holes on the filter element frame of the filter are evenly distributed in the length direction of the filter element frame. As a result, during use, the closer the filter element frame is to the water outlet, the greater pressure difference exists in the water. Therefore, the higher the usage rate of the filter screen is, the faster the dirt accumulates. As a result, it is easy to cause the problem that the filter screen is partially blocked. US 6,936,160 B2 discloses a sensor component that may be used in conjunction with a filter module may include a plurality of sensor packages. The latter, in turn, may incorporate one or more micro-electromechanical systems (MEMS) sensors to measure various characteristics of fluid flow and filtration. A single sensor component may be adapted to measure the pressure, temperature, flow rate, differential pressure, conductivity, viscosity, pH level, etc. of the fluid at an upstream and a downstream location. Sensor measurements may be obtained continuously in order to monitor and indicate fluid conditions, including the use of a warning mechanism to indicate an out-of-range condition when the measurements fall outside of pre-set limits. Depending on the application and the fluid being filtered, data, including measurement data, may be transmitted through electrical connections or wirelessly. In wireless configurations, a sleep-mode may be included to maximize the life of local power supplies. US 6,377,171 B1 discloses a monitoring system for monitoring the condition of a filter filtering a gas or liquid. Using various sensors, the permeability of the filter is monitored on a continuous basis. A significant increase in permeability, decrease in permeability or rate of change of permeability can lead to an indication of filter failure, such as rupture, leakage, loading and unloading. The system can be monitored by a computer and monitored from a remote location through phone lines and Internet computer systems.

### SUMMARY

The main objective of the present disclosure is to provide a filter element assembly, which aims to solve the problem that the filter screen is partially blocked during the use of the existing filter element assembly.

In order to achieve the above objective, the present disclosure provides a filter element assembly, including: a filter element frame. The filter element frame has a water filtering cavity, an end of the water filtering cavity is a water outlet, the filter element frame has a perforated structure adjacent to the water outlet, the perforated structure has a plurality of permeable holes communicating with the water filtering cavity, and the perforated structure has an opening ratio increasing continuously or stepwise along a direction away from the water outlet.

In an embodiment, the opening ratio of the perforated structure is increased stepwise along the direction away from the water outlet.

In an embodiment, the perforated structure includes a first perforated portion adjacent to the water outlet and a second perforated portion remote to the water outlet, each permeable hole of the first perforated portion is of an identical area, and each permeable hole of the second perforated portion is of an identical area.

In an embodiment, the permeable holes of the first perforated portion and the permeable holes of the second perforated portion are arranged in a matrix and are provided in the perforated structure, and each permeable hole of the first perforated portion is smaller than each permeable hole of the second perforated portion in area.

In an embodiment, the permeable holes of the first perforated portion are circular, and the permeable holes of the second perforated portion are rectangular.

In an embodiment, the first perforated portion accounts for 1/4^{~}2/5 of a length of the filter element frame, and the second perforated portion accounts for 2/5^{~}1/2 of the length of the filter element frame.

In an embodiment, a periphery of each permeable hole is provided with a convex rib.

In an embodiment, a magnetic member is arranged on an end of the filter element frame opposite to the water outlet.

In an embodiment, a scale inhibitor is placed in the water filtering cavity of the filter element frame.

In an embodiment, the filter element assembly further includes a filter screen provided on a periphery of the filter element frame.

In an embodiment, the copper head component includes a mounting cap, and a water inlet pipe and a water outlet pipe are provided on the mounting cap.

The filter further includes a sensor component, including a flow measurement element provided in the water inlet pipe and/or the water outlet pipe, and a temperature measurement element provided in the water inlet pipe and/or the water outlet pipe.

According to the invention, the flow measurement element is a magnetic rotor, and the magnetic rotor is configured to generate a magnetic field signal that changes with water flow rate.

In an embodiment, the magnetic rotor includes:
an outer frame provided in the water inlet pipe and/or the water outlet pipe; and
an impeller rotatably provided in the outer frame,
the impeller is configured to be driven by water flow to rotate, to generate the magnetic field signal that changes with the water flow rate.

In an embodiment, the flow measurement element further includes:
a Hall element provided on the filter bottle,
the Hall element corresponds to the magnetic rotor, and is configured for receiving the magnetic field signal of the magnetic rotor.

In an embodiment, the Hall element is detachably provided on the filter bottle.

In an embodiment, the filter element assembly is provided in an accommodating cavity formed by the copper head component and the filter bottle, the accommodating cavity is divided into a water inlet cavity and a water filtering cavity located in the filter element frame, the water inlet pipe of the copper head component is in fluid communication with the water inlet cavity, and the water outlet pipe of the copper head component is in fluid communication with the water filtering cavity.

In an embodiment, the mesh cover is provided between the filter element frame and the mounting cap, an end of the filter element frame is fixed to the mesh cover, the mesh cover is provided with filter holes for communicating with the water filtering cavity, a filter grille is provided outside the mesh cover, the filter grid extends into the water inlet cavity and abuts on an inner wall of the filter bottle, and a water flow channel for communicating with the water inlet cavity is formed between adjacent filter grids.

The present disclosure further provides a filter, including the filter element assembly as described above.

The present disclosure further provides a water way control system, including a processor, a water way breaking actuator and a filter as described above, and the processor is electrically connected to the water way breaking actuator and the filter, respectively.

The present disclosure further provides a water heater, including the filter as described above or the water way control system as described above.

During the use of the filter element assembly, due to the pressure difference between the water inlet and the water outlet, the pressure difference between the inner and outer sides of the filter screen is not uniform, thus it is easy to cause the problem that the filter screen is partially blocked. Therefore, in technical solutions of the present disclosure, by changing the opening ratio of the filter element frame, the farther away from the water outlet, the larger the permeable area is, to reduce the pressure difference near the water outlet, while relatively increase the pressure difference away from the water outlet. Furthermore, the difference of the differential pressure value at each place of the filter element frame is reduced, the overall use efficiency of the filter screen is effectively improved, and the problem that the filter screen is partially blocked is avoided.

### BRIEF DESCRIPTION OF THE DRAWINGS

In order to more clearly illustrate the technical solutions in the embodiments of the present disclosure or in the prior art, the following briefly introduces the accompanying drawings that need to be used in the description of the embodiments or the prior art. Obviously, the drawings in the following description are only some embodiments of the present disclosure. For those of ordinary skill in the art, other drawings can also be obtained based on the structures shown in these drawings without any creative effort.
FIG. 1 is a schematic structural view of a filter according to an embodiment of the present disclosure, the dotted circles only play a role of marking, not lines of solid structures.
FIG. 2 is a schematic exploded structural view of a filter element assembly in FIG. 1.
FIG. 3 is a schematic structural view of a filter element frame in the filter element assembly according to an embodiment of the present disclosure.
FIG. 4 is a front view of the filter element frame in FIG. 3.
FIG. 5 is a partial schematic structural view of the filter element frame in FIG. 4.
FIG. 6 is a schematic view of the filter element frame in FIG. 4 from another perspective.
FIG. 7 is a cross-sectional view of the filter element frame in FIG. 6.
FIG. 8 is a schematic view of the filter according to an embodiment of the present disclosure.
FIG. 9 is a front view of FIG. 8.
FIG. 10 is an exploded view of FIG. 8.
FIG. 11 is a schematic view of an internal structure of the filter according to an embodiment of the present disclosure.
FIG. 12 is a schematic view of an internal structure of a water heater according to an embodiment of the present disclosure.
FIG. 13 is a schematic view of an embodiment of the present disclosure in which the filter is provided on the water heater.
FIG. 14 is a schematic view of an embodiment of the present disclosure in which the filter is matched with a thermostatic valve.
FIG. 15 is a schematic view of an embodiment of the present disclosure in which the filter is matched with a water mixing valve.

### Description of reference signs

| Reference sign | Name | Reference sign | Name |
|---|---|---|---|
| 100 | filter | 200 | copper head assembly |
| 210 | mounting cap | 220 | water inlet pipe |
| 230 | water outlet pipe | 300 | filter bottle |
| 400 | filter element assembly | 410 | filter element frame |
| 420 | filter screen | 411 | water outlet |
| 412 | free end | 413 | perforated structure |
| 414 | rib | 415 | installation position |
| 423 | first perforated portion | 433 | second perforated portion |
| 500 | mesh cover | 600 | water inlet cavity |
| 700 | water filtering cavity | P | permeable hole |

The realization of the objective, functional characteristics, and advantages of the present disclosure are further described with reference to the accompanying drawings.

### DETAILED DESCRIPTION OF THE EMBODIMENTS

The technical solutions of the embodiments of the present disclosure will be described in more detail below with reference to the accompanying drawings. It is obvious that the embodiments to be described are only some rather than all of the embodiments of the present disclosure. All other embodiments obtained by persons skilled in the art based on the embodiments of the present disclosure without creative efforts shall fall within the scope of the present disclosure.

It should be noted that if there is a directional indication (such as up, down, left, right, front, rear...) in the embodiments of the present disclosure, the directional indication is only used to explain the relative positional relationship, movement, etc. of the components in a certain posture (as shown in the drawings). If the specific posture changes, the directional indication will change accordingly.

In addition, the descriptions associated with, e.g., "first" and "second," in the present disclosure are merely for descriptive purposes, and cannot be understood as indicating or suggesting relative importance or impliedly indicating the number of the indicated technical feature. Therefore, the feature associated with "first" or "second" can expressly or impliedly include at least one such feature. Besides, the meaning of "and/or" appearing in the disclosure includes three parallel scenarios. For example, "A and/or B" includes only A, or only B, or both A and B. The technical solutions between the various embodiments can be combined with each other, but they must be based on the realization of those of ordinary skill in the art. When the combination of technical solutions is contradictory or cannot be achieved, it should be considered that such a combination of technical solutions does not exist, nor is it within the scope of the present disclosure.

Opening ratio refers to a ratio of a sum of areas of all openings in a region to an area of the region. Sₐ represents the area of the region, S_{b} represents the sum of areas of all openings in the region, S_{c} represents the opening ratio, and S_{c}=S_{b}/Sₐ. The way of adjusting the opening ratio can be performed by changing the area of each opening, or changing the number of openings in the region.

The present disclosure provides a filter element assembly, a filter including the filter element assembly, and a water heater including the filter. The water inlet and the water outlet of the filter element assembly are located at the same end.

During using the filter, since the water inlet and the water outlet of the filter element assembly are located at the same end, there is a pressure difference between the water inlet and the water outlet, the pressure at both sides of the filter screen adjacent to the water inlet and water outlet will be higher, while the pressure at both sides of the filter screen far away from the water inlet and the water outlet will be lower. This uneven pressure difference will cause the problem that the filter screen is partially blocked.

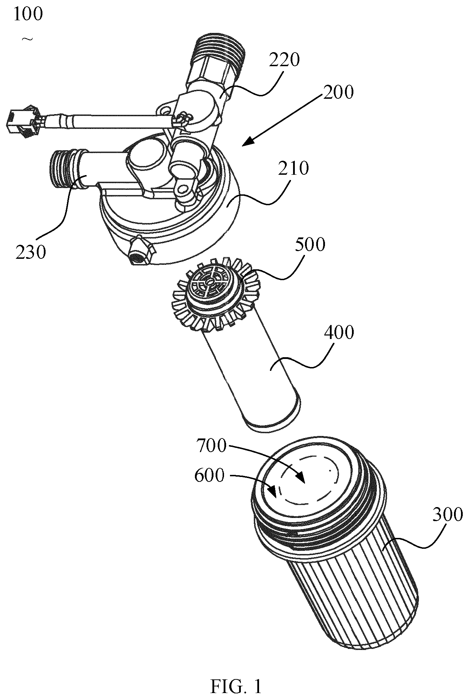

FIG. 1 is an exploded schematic structural view of a filter 100 in the present disclosure. The filter 100 includes a copper head assembly 200, a filter bottle 300, a filter element assembly 400 and a mesh cover 500 and other structures. The filter element assembly 400 includes a filter screen 420 and a filter element frame 410 and other components.

The copper head assembly 200 includes structural components such as a mounting cap 210, a water inlet pipe 220 and a water outlet pipe 230. The shape of the mounting cap 210 may be defined according to the shape of the filter bottle 300, and the shape is usually circular, but can also be square or other polygonal shapes. The portion where the mounting cap 210 is connected to the filter bottle 300 is provided with an internal thread, and the mounting cap 210 is fixed on the filter bottle 300 by means of screw connection. The water inlet pipe 220 and the water outlet pipe 230 are provided on the outer surface of the mounting cap 210, and the two water pipes are in parallel or an angle is formed between the two water pipes.

The filter bottle 300 is substantially cylindrical, one end of the filter bottle 300 is open, and the other end of the filter bottle 300 is closed without other passages being provided. To match the shape of the copper head assembly 200 with the shape of the filter bottle 300, the filter bottle 300 is roughly cylindrical, but it is not excluded that the cross-sectional shape of the filter bottle 300 is a rectangle or other polygon. The open end of the filter bottle 300 is provided with an external thread, which matches the internal thread of the copper head assembly 200 described above.

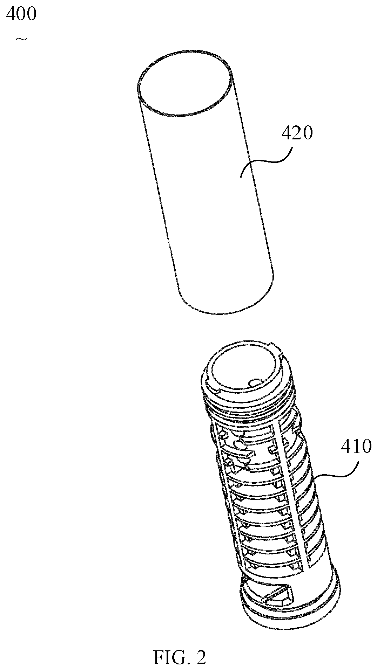

FIG. 2 is an exploded schematic structural view of the filter element assembly 400. The filter element assembly 400 includes a filter element frame 410, a magnetic component (not shown), a filter screen 420, and the like. The filter screen 420 is supported by the filter element frame 410 and is located at the outer periphery of the filter element frame 410. When the filter element assembly 400 is provided in the accommodating cavity formed by the copper head assembly 200 and the filter bottle 300, as shown FIG. 1, the filter element assembly 400 divides the entire accommodating cavity into two parts. The first part is located in the water inlet cavity 600 at the outer periphery of the filter screen 420 (the outer peripheral cavity shown by the dotted circle in FIG. 1). The other part is the water filtering cavity 700 (the inner peripheral cavity shown by the dotted circle in FIG. 1) located in the filter screen 420 (that is, in the filter element frame 410). The water inlet cavity 600 and the water filtering cavity 700 communicate with each other through the filter holes on the filter screen 420. The water inlet pipe 220 of the copper head assembly 200 is in fluid communication with the water inlet cavity 600, and the water outlet pipe 230 of the copper head assembly 200 is in fluid communication with the water filtering cavity 700.

During the process of filtering water, the raw water flows into the water inlet cavity 600 from the water inlet pipe 220, and then flows into the water filtering cavity 700 after being filtered through the filter screen 420, and then is discharged from the water outlet pipe 230. It should be noted that since the water inlet pipe 220 and the water outlet pipe 230 of the filter 100 are located at the same end, during the flow process of the liquid, if the openings on the filter element frame 410 are evenly distributed, the liquid pressure difference between the inside and outside of the filter screen 420 is relatively large near an end of the water outlet. Therefore, the higher the usage rate of the filter screen 420 is, the faster the dirt accumulates, and thus the problem of the filter screen 420 being partially blocked is likely to occur. The present disclosure solves this problem by improving the filter element frame 410.

The filter element frame 410 in the filter element assembly 400 of the present disclosure will be described in detail below.

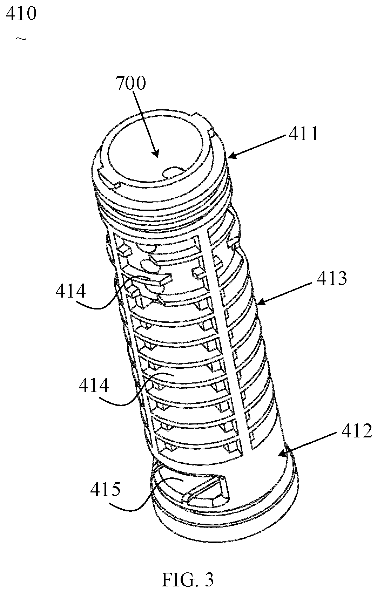

As shown in FIG. 3, FIG. 3 is a schematic structural diagram of the filter element frame 410 in the present disclosure. The filter element frame 410 has a water filtering cavity 700, an end of the water filtering cavity 700 is open, and the open end is the water outlet 411 of the filter element frame 410. The water outlet pipe 230 is in fluid communication with the water filtering cavity 700. For convenience of description, two opposite ends of the filter element frame 410 are defined, one end being the water outlet 411 and the other end being the free end 412.

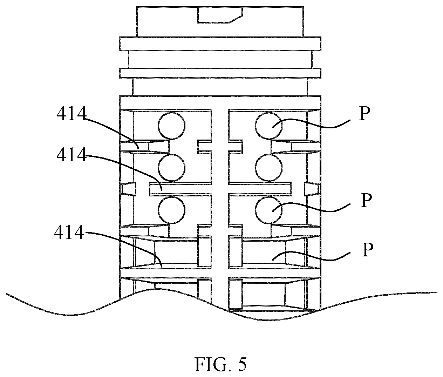

The filter element frame 410 has a perforated structure 413 located between the water outlet 411 and the free end 412. The perforated structure 413 is provided with a plurality of permeable holes P (as shown in FIG. 5), and the permeable holes P are in fluid communication with the water filtering cavity 700. In particular, the opening ratio of the perforated structure 413 increases in the direction from the water outlet 411 to the free end 412, and the increasing manner may be continuous or stepwise. Regarding the opening ratio, it has already been defined in the foregoing. The following are specific examples of increasing manner.

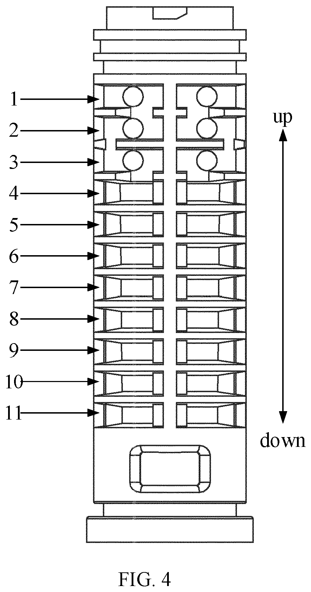

For the convenience of description, the upper and lower directions are referred to, and the upper and lower directions are shown in FIG. 4, the water outlet 411 of the filter element frame 410 is located at the upper end. In addition, it is also convenient for description. The perforated structure 413 is divided into 11 layers in the upper and lower directions for explanation, and each layer is represented by the corresponding Arabic numerals in FIG. 4.

In the first layer area to the 11^{th} layer area, the surface area of each layer is the same, so S₀ is used to represent the surface area of each layer. Correspondingly, a sum of areas of all the permeable holes P on the first layer area is represented by S₁, a sum of areas of all the permeable holes P on the second layer area is represented by S₂, and a sum of areas of all the permeable holes P on the 11^{th} layer area is represented by S₁₁. In the case of continuous increase, S₁ /S₀ < S₂ /S₀ < ...... < S₁₀/S₀ < S₁₁ /S₀. The difference between S₁ /S₀ and S₂ /S₀ may or may not be equal to the difference between S₂ /S₀ and S₃ /S₀, and the differences between the following ratios may or may not be equal.

In the first layer area to the 11^{th} layer area, the surface area of each layer is the same, so S₀ is used to represent the surface area of each layer. Correspondingly, a sum of areas of all the permeable holes P on the first layer area is represented by S₁, a sum of areas of all the permeable holes P on the second layer area is represented by S₂, and a sum of areas of all the permeable holes P on the 11^{th} layer area is represented by S₁₁. In the case of stepwise increase, S₁= S₂= S₃, S₄= S₅= S₆, S₇= S₈= S₉, S₁₀= S₁₁, and (S₁+ S₂+ S₃)/3S₀ < (S₄+ S₅+ S₆) / 3S₀ < (S₇+ S₈+ S₉) / 3S₀ < (S₁+ S₂+ S₃) / 3S₀. Or, S₁= S₂= S₃, S₄= S₅= S₆, S₇= S₈= S₉, S₁₀= S₁₁, and (S₁+ S₂+ S₃) / 3S₀ < (S₄+ S₅+ S₆) / 3S₀ = (S₇+ S₈+ S₉) / 3S₀ = (S₁+ S₂+ S₃) / 3S₀. Or, S₁= S₂= S₃, S₄= S₅= S₆, S₇= S₈= S₉, S₁₀= S₁₁, and (S₁+ S₂+ S₃) / 3S₀ = (S₄+ Ss+ S₆) / 3S₀ = (S₇+ S₈+ S₉) / 3S₀ < (S₁+ S₂+ S₃) / 3S₀. Only some relational expressions are listed here, and the replacement of other simple ratio relation belongs to the scope of the present disclosure.

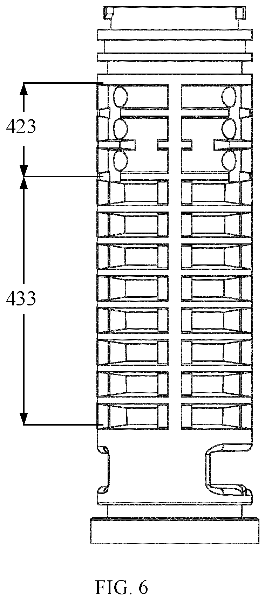

Exemplified stepwise structure is explained as shown in FIG. 6. FIG. 6 is a schematic structural view of the filter element structure according to an embodiment of the present disclosure. The perforated structure 413 in this embodiment is divided into a first perforated portion 423 and a second perforated portion 433 in the vertical direction, and the first perforated portion 423 is located at the upper end of the second perforated portion 433. For the convenience of processing, each permeable hole P of the first perforated portion 423 has the same area, and each permeable hole P of the second perforated portion 433 has the same area. In order to ensure that the opening ratio of the second perforated portion 433 is greater than that of the first perforated portion 423, the area and/or the number of openings of the first perforated portion 423 (or the second perforated portion 433) can be adjusted accordingly.

Further, in order to facilitate processing and molding, all the permeable holes P of the first perforated portion 423 and the second perforated portion 433 are provided in a matrix on the perforated structure 413. The matrix arrangement also has the advantage of ensuring that all parts of the filter element frame 410 are uniformly stressed, improving the support strength of the filter element frame 410, and avoiding the problem of easily damaging the parts. In order to ensure that the opening ratio of the second perforated portion 433 is greater than that of the first perforated portion 423, the area of the permeable hole P of the first perforated portion 423 is smaller than the area of the permeable hole P of the second perforated portion 433.

The lengths of the first perforated portion 423 and the second perforated portion 433 are as follows. The first perforated portion 423 accounts for 1/4-2/5 of the length of the filter element frame 410, and the second perforated portion 433 accounts for 2/5-1/2 of the length of the filter element frame 410. When the first perforated portion 423 accounts for 1/4 of the length of the filter element frame 410, the second perforated portion 433 accounts for 1/2 of the length of the filter element frame 410. When the first perforated portion 423 accounts for 2/5 of the length of the filter element frame 410, the second perforated portion 433 also accounts for 2/5 of the length of the filter element frame 410.

The above-mentioned permeable holes P are not limited to the type of openings, and can be circular holes, rectangular holes, triangular holes, polygonal holes or special-shaped holes, etc. The permeable hole P can be a conventional through hole, a flared through hole, or a narrowed through hole, or the like. As shown in FIG. 6, the permeable hole P is a circular hole, and the permeable hole P of the second perforated portion 433 is a rectangular hole. The first perforated portion 423 is a circular hole. For ease of processing, the hole diameter is relatively small, and the hole gap is relatively large. The second perforated portion 433 has a square hole, since the opening of the second perforated portion 433 is relatively large and the hole spacing is relatively small, considering the structural strength of the perforated portion, the regular connection columns between the square holes have relatively high supporting strength, and thus satisfy the structural strength of this portion.

Further, in order to improve the overall support strength of the filter element frame 410, as shown in FIG. 3 and FIG. 5, a rib 414 is provided around the permeable hole P to play a strengthening role. In addition, the filter screen 420 is supported on the outer periphery of the filter element frame 410. Therefore, the arrangement of the ribs 414 can separate the filter screen 420 and the filter element frame 410, which facilitates the flow of liquid.

The ribs 414 can be provided around the circular hole, or can be provided on the upper, the lower, the side of the circular hole, or combined with each other. The ribs 414 can also be provided on the upper, the lower, the side of the square hole, or combined with each other.

The extending direction of the ribs 414 may be perpendicular to the vertical direction, or parallel to the vertical direction, or have a certain angle with the vertical direction. The ribs 414 can also be provided in a zigzag shape, a grid shape or a wavy shape. The ribs 414 may be continuous with each other, or may be separated from each other. The raised heights of all the ribs 414 may be all the same, or may be partially the same.

During the use of the filter 100, since the water inlet and outlet pipes of the filter element assembly 400 are all provided above the filter 100, the closer to the water outlet 411, the greater the liquid flow rate, the pressure difference between the inner and outer sides of the filter screen 420 is larger, and the farther away from the water outlet 411, the pressure difference between the inner and outer sides of the filter screen 420 is smaller. Therefore, under the premise that the pressure difference values of the filter element frame 410 are quite different, in the filter element frame 410 provided by the technical solution of the present disclosure, by changing the opening ratio, the farther away from the water outlet 411, the larger the permeable area is. Therefore, the pressure difference near the water outlet 411 is reduced, and the pressure difference away from the water outlet 411 is relatively increased. Thus, the difference of the differential pressure values around the filter element frame 410 is reduced, the overall use efficiency of the filter screen 420 is effectively improved, and the problem that the filter screen is partially blocked is avoided.

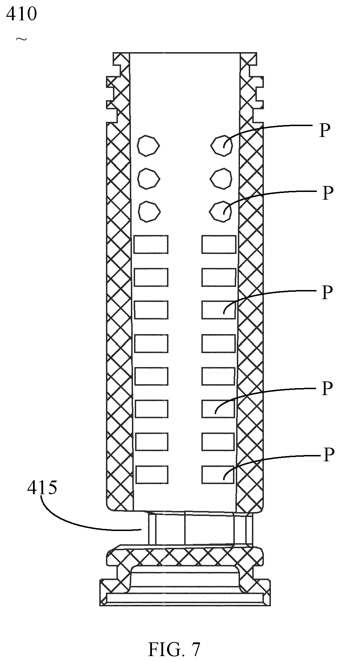

From the perspective of purification, further improvements are made to the filter element frame 410, as shown in FIG. 3 or FIG. 7, a free end 412 of the filter element frame 410 is provided with an installation position 415 for installing a magnetic member (not shown). During the water filtering process of the filter, the magnetic member adsorbs metal substances in the filtered water of the water filtering cavity 700, such as iron, cobalt, nickel and other substances, to improve the filtering quality.

The installation position 415 is provided as an accommodating groove, the accommodating groove traverses the free end 412 of the filter element frame 410, the magnetic member directly penetrates into the installation position 415, and is limited by the filter screen 420 wrapped outside to prevent it from falling out. It is also possible to set the magnetic member to be inserted into the installation position 415. The installation method is simple, which facilitates the installation of the magnetic member, and also facilitates disassembly, cleaning and replacement in the later stage.

It is also worth noting that, in the transverse direction of the accommodating groove, only one end may be open and the other end may be closed. In addition, the accommodating groove may pass through the water filtering cavity 700, or may be separated from the water filtering cavity 700.

In order to further improve the filtering effect, a scale inhibitor or other functional raw materials such as calcium sulfite and the like are placed in the water filtering cavity 700 of the filter element frame 410.

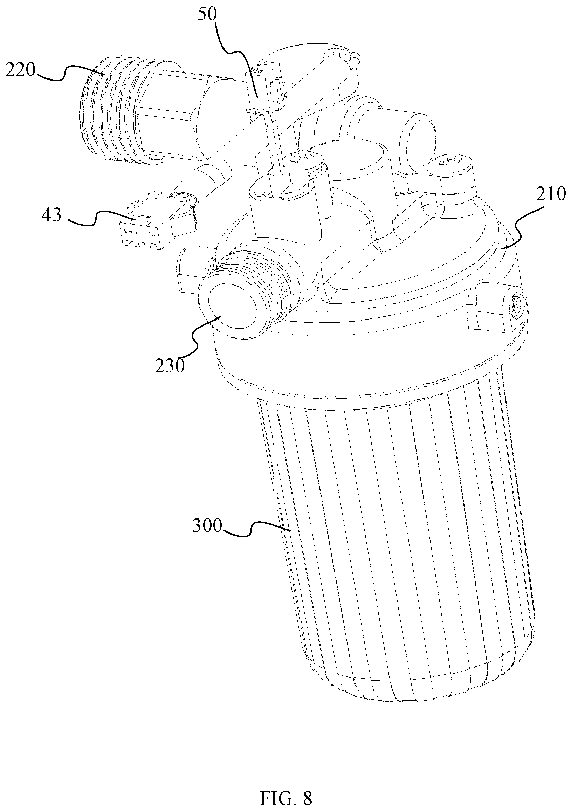

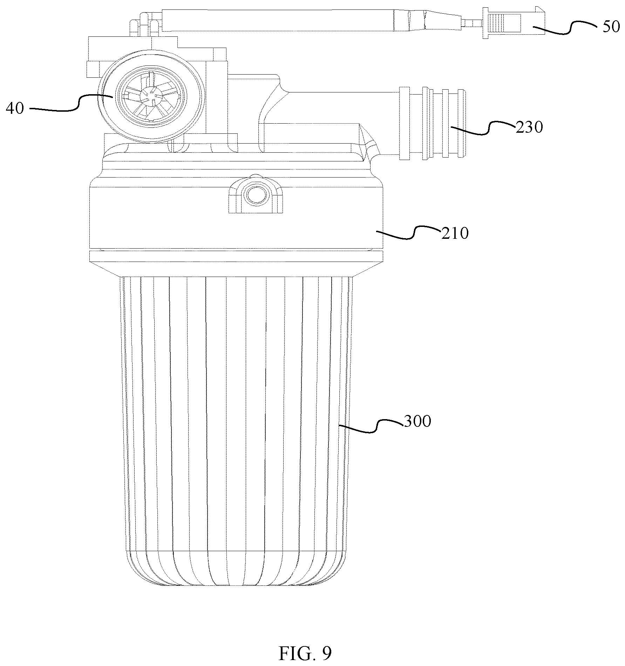

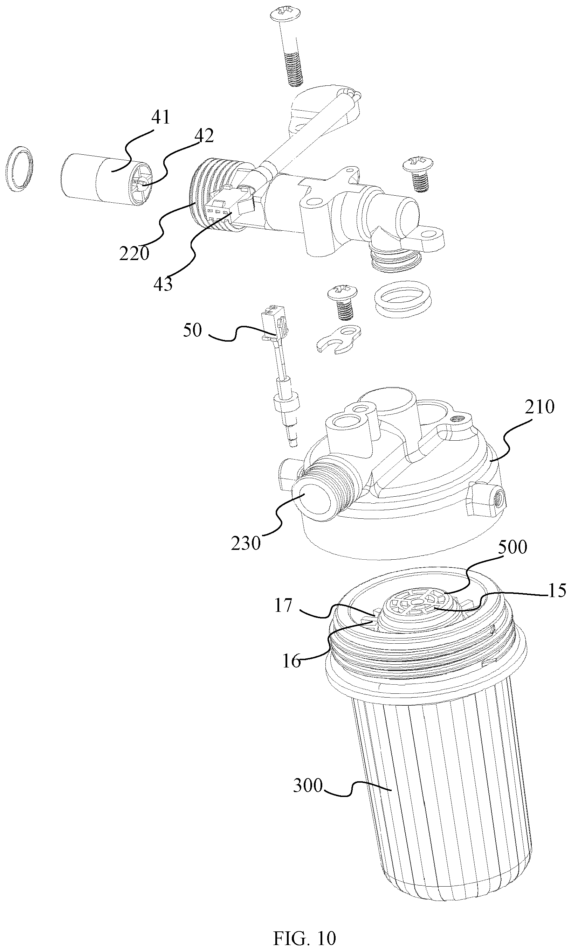

As shown in FIG. 8 to FIG. 10, in an embodiment, the copper head assembly 200 includes a mounting cap 210. A water inlet pipe 220 and a water outlet pipe 230 are mounted on the mounting cap 210. The filter element assembly 400 can be provided in the accommodating cavity formed by the copper head assembly 200 and the filter bottle 300. The accommodating cavity is divided into a water inlet cavity 600 and a water filtering cavity 700 located in the filter element frame 410. The water inlet pipe 220 of the copper head assembly 200 is in fluid communication with the water inlet cavity 600, and the water outlet pipe 230 of the copper head assembly 200 is in fluid communication with the water filtering cavity 700.

In an embodiment, the filter further includes a sensor assembly.

The sensor assembly includes a flow measuring element 40 provided in the water inlet pipe 220 and/or the water outlet pipe 230. Raw water enters the cavity through the water inlet pipe 220. When the raw water flows through the filter element assembly 400, the filter element assembly 400 filters the raw water to generate purified water, and the purified water is output to the outside of the filter through the water outlet pipe 230.

The flow measuring element 40 is configured to detect the flow of the water flowing through the water inlet pipe 220 and/or the water outlet pipe 230. The flow measuring element 40 can detect the flow of the raw water in the water inlet pipe 220 and can also detect the flow of the purified water in the water outlet pipe 230, or can detect the raw water of the water inlet pipe 220 and the purified water of the water outlet pipe 230 at the same time.

Since the flow measuring element 40 is provided in the water inlet pipe 220 and/or the water outlet pipe 230, an integrated design with the filter can be realized, the user does not need to purchase the flow measuring element 40 separately to assemble with the filter. The flow measuring element 40 only needs to be combined with the water inlet pipe 220 and/or the water outlet pipe 230 of the filter. The water-using equipment only needs to be matched with the filter, to simplify the user's assembling steps, improve the installation efficiency, and help to reduce the installation cost.

Since the flow measuring element 40 can be directly assembled with the filter as a whole, when installing the filter on a water-using equipment such as a water heater, the flow detection element does not need to occupy the inner space of the water-using equipment, to improve the space utilization rate of the water-using equipment.

The flow measuring element 40 can be a flow sensor, such as a Hall flowmeter, or other flowmeters. The assembly method of the flow measuring element 40 and the water inlet pipe 220 and/or the water outlet pipe 230 may be determined according to the selection of the flow sensor, and will not be repeated herein.

In another embodiment of the present disclosure, different from the foregoing embodiments, the sensor assembly is a temperature measuring element 50 provided in the water inlet pipe 220 and/or the water outlet pipe 230, and the temperature measuring element 50 may be a temperature sensor.

When making the filter, the temperature measuring element 50 can be provided on the water inlet pipe 220 to detect the temperature of the raw water input to the water-using equipment, and can also be provided on the water outlet pipe 230 to detect the temperature of the filtered purified water. The temperature measuring element 50 can also be provided on the water inlet pipe 220 and the water outlet pipe 230.

In another embodiment of the present disclosure, different from the foregoing embodiments, both the flow measuring element 40 and the temperature measuring element 50 are provided on the water inlet pipe 220 and/or the water outlet pipe 230.

The filter can be a front-mounted filter, that is, provided on the water inlet pipe of the water-using equipment. When the flow measuring element 40 detects that the flow exceeds the preset threshold, or the temperature measuring element 50 detects that the temperature exceeds the preset threshold, the water inlet pipe 220 or the water outlet pipe 230 can be controlled to be closed by an external controller, to close the water inlet pipe of the water-using equipment, and prevent the water-using equipment from operating beyond a preset condition.

In an embodiment of the present disclosure, when the sensor assembly includes a flow measurement element 40, the flow measurement element 40 is a magnetic rotor, and the magnetic rotor is configured to generate a magnetic field signal that changes with the change of the water flow rate. By using a magnetic rotor, a magnetic field signal that changes with the flow rate can be generated, and other components can be used to receive and read the magnetic field signal. The flow rate in the water inlet pipe 220 and/or the water outlet pipe 230 can be identified and calculated according to the change of the magnetic field, to obtain the water inlet and/or water outlet volume of the filter provided in this example.

Since the magnetic field signal can be received and sent without a physical wire, it can be avoided to arrange the signal transmission line with holes or slots, which ensures the stability and sealing performance. In addition, since the working environment of the front-mounted filter is generally a weak magnetic field environment, the flow information is transmitted through the magnetic field signal, which is highly efficient and will not be interfered. In addition, the magnetic rotor adopts a permanent magnet, which can realize flow measurement only by supplying power to the measuring element, reducing the working energy consumption and saving energy.

In this embodiment, the magnetic rotor includes an outer frame 41 provided in the water inlet pipe 220 and/or the water outlet pipe 230, and an impeller 42 is rotatably provided in the outer frame 41. The impeller 42 is configured to rotate under the drive of the water flow, to generate a magnetic field signal that changes with the change of the water flow rate. When the flow measuring element 40 is provided in the water inlet pipe 220, the outer frame 41 is provided in the water inlet pipe 220. When the flow measuring element 40 is provided in the water outlet pipe 230, the outer frame 41 is provided in the water outlet pipe 230.

The outer wall of the outer frame 41 is connected to the inner wall of the water inlet pipe 220 or the water outlet pipe 230, the outer frame 41 is hollow inside, and the impeller 42 is rotatably provided in the hollow structure of the outer frame 41.

When the water flows through the inner space of the outer frame 41, the water flow drives the impeller 42 to rotate, during the rotation of the impeller 42, a magnetic field signal that changes correspondingly with the change of the water flow rate is generated, and the magnetic field signal can be received with an external controller, the external controller determines whether to close the water inlet pipe 220 or the water outlet pipe 230 according to the strength of the magnetic field signal.

Further, the flow measuring element 40 further includes a Hall element 43 provided on the filter bottle 300. The Hall element 43 corresponds to the magnetic rotor, and is configured for receiving the magnetic field signal of the magnetic rotor. The Hall element 43 is matched with the magnetic rotor. When the impeller 42 rotates with the water flow, the Hall element 43 receives the magnetic field signal generated by the magnetic rotor, and an external controller can be electrically connected to the Hall element 43. When the external controller receives the electrical signal sent by the Hall element 43, it determines whether to trigger the closing of the water inlet pipe 220 or the water outlet pipe 230. During installation, the Hall element 43 can be detachably mounted on the filter bottle 300 to facilitate the installation of the Hall element 43.

In order to improve the filtering efficiency, in this embodiment, the water filtering cavity 700 and/or the water inlet cavity 600 is provided with a magnetizing element 30 for magnetically adsorbing impurities in water, such as iron filings, etc., to improve filtration efficiency and reduce the problem that the filtration efficiency of the filter element assembly 400 is reduced due to the attachment of impurities on the filter element assembly 400.

During installation, the magnetizing element 30 can be provided in the water filtering cavity 700, the magnetizing element 30 can also be provided in the water inlet cavity 600, or the magnetizing element 30 can be provided in both the water filtering cavity 700 and the water inlet cavity 600.

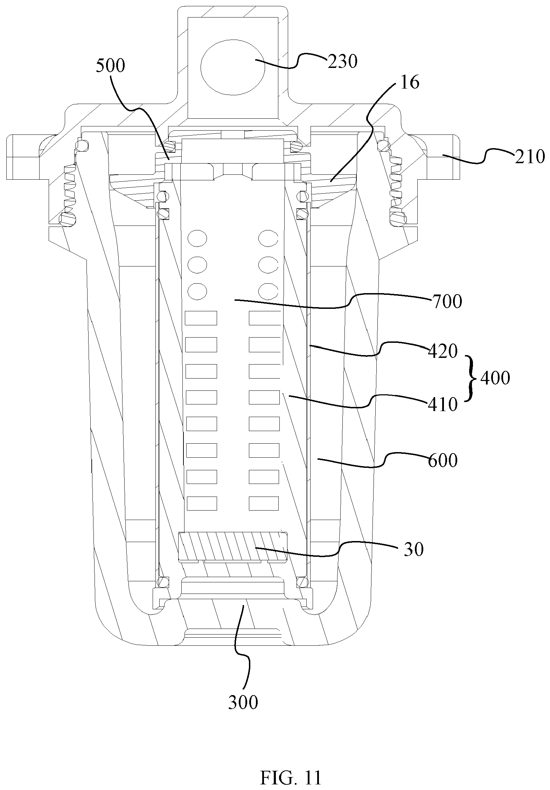

As shown in FIG. 11, in an embodiment of the present disclosure, a cavity is formed inside the filter bottle 300, and an end of the filter bottle has an opening. The mounting cap 210 is provided at the opening of the filter bottle 300 to close the cavity. The water inlet pipe 220 and the water outlet pipe 230 are provided on the mounting cap 210. An end of the filter element frame 410 can be connected to the mounting cap 210. The other end of the filter element frame 410 abuts on the end of the filter bottle 300 away from the mounting cap 210. The filter bottle 300 forms the main structure of the filter, and the filter bottle 300 has the opening for installing the mounting cap 210. When the mounting cap 210 is provided on the opening, the filter bottle 300 is in a closed state. At this time, the water flow can only enter the cavity through the water inlet pipe 220, or the water flow can be output from the cavity through the water outlet pipe 230.

By providing the mounting cap 210, it is convenient to assemble the filter bottle 300, to install and replace the filter element assembly, and to facilitate the user to perform regular maintenance on the filter.

An end of the filter bottle provided with an opening is perforated portion, and the end opposite to the perforated portion is the bottom of the filter bottle. When the filter element frame 410 is provided in the cavity, an end of the filter element frame 410 is fixed through the mounting cap 210, and the other end of the filter element frame 410 is fixed through the bottom of the filter bottle, and the filter element assembly is kept in a stable state. Thus, the problem of failure of the filter element assembly 400 caused by the displacement of the filter element assembly during the water flow is avoided.

When the magnetized element 30 is provided, the magnetized element 30 can be provided at the bottom of the filter bottle, and the magnetized element 30 can be provided in the water filter cavity 700. The filter element frame 410 abuts on the bottom of the filter bottle, the magnetized element 30 can also be sleeved on the end of the filter element assembly 400 away from the end of the mounting cap 210, to make the magnetized element 30 locate in the water inlet cavity 600.

In order to facilitate the installation of the filter element assembly 400, in this embodiment, the filter bottle is provided with a mesh cover 500. The mesh cover 500 is provided between the filter element frame 410 and the mounting cap 210. An end of the filter element frame 410 is fixed to the mesh cover 500. The mesh cover 500 is provided with filter holes 15 for communicating with the water filtering cavity 700. A filter grille 16 is provided outside the mesh cover 500. The filter grid 16 extends into the water inlet cavity 600 and abuts on an inner wall of the filter bottle. A water flow channel 17 for communicating with the water inlet cavity 600 is formed between adjacent filter grids 16. The mesh cover 500 is connected to the mounting cap 210. When the filter element frame 410 is connected to the mesh cover 500, the filter element frame 410 is fixed on the mounting cap 210 through the mesh cover 500.

The water filtering cavity 700 communicates with the water inlet pipe 220, and the water inlet cavity 600 communicates with the water outlet pipe 230. Raw water enters the interior of the mounting cap 210 through the water inlet pipe 220, and enters the water filter cavity 700 through the filter hole 15. The purified water filtered by the filter screen 420 enters the water inlet cavity 600, and flows to the water outlet pipe 230 on the mounting cap 210 through the water flow channel 17 to be output.

By providing the mesh cover 500, it is convenient to install the filter element frame 410, and the filter element frame 410 can be quickly matched with the mounting cap 210. When the water flows through the filter hole 15 and the water flow channel 17, it can be filtered to further remove impurities in the water and improve the filtering efficiency.

On the basis of the above filter, the present disclosure provides a water way control system.

The water way control system includes a processor, a water way breaking actuator and the filter described in any of the above embodiments. The processor is electrically connected to the water way breaking actuator and the filter. The processor is configured for receiving the signal of the sensor assembly, and sending a control signal to the water way breaking actuator, to control the water way.

On the basis of the filter, the present disclosure provides a water heater.

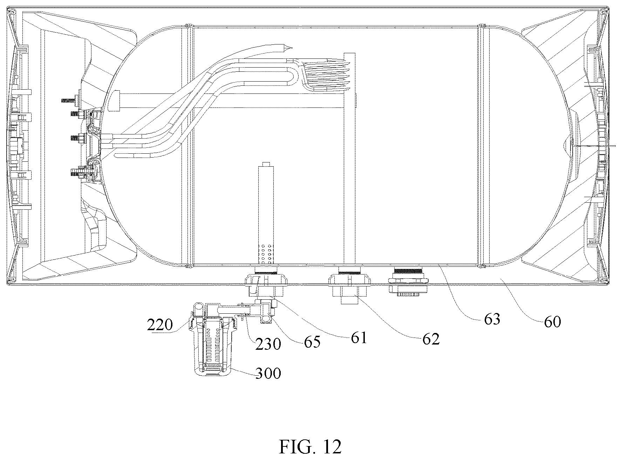

As shown in FIG. 12, the water heater includes the filter described in any of the above embodiments. The filter can be provided on the water inlet pipe of the water heater to form a front-mounted filter, or can be provided on the water outlet pipe of the water heater to form a rear-mounted filter.

The water heater can also include the above-mentioned water way control system. The water way control system is provided to realize the water inlet control of the water heater and prevent dry burning caused by the drop of water in the water heater when the external water source of the water heater is cut off.

The sensor assembly can be electrically connected to the water heater controller, to receive electrical signals from the sensor assembly through the water heater, and improve the control accuracy of the water heater.

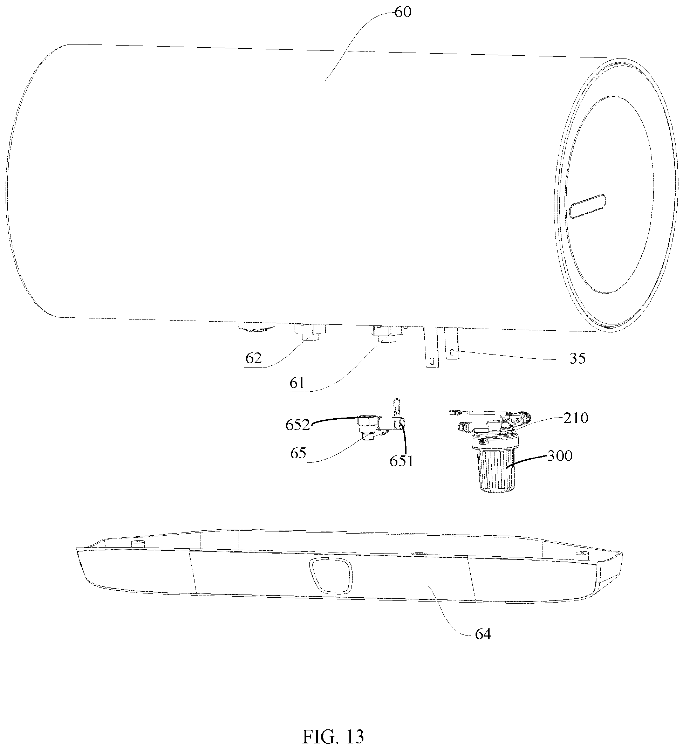

As shown in FIG. 13, the water heater includes a water heater body 60, provided with a water inlet pipe 61 and a water outlet pipe 62. The filter is provided on the water inlet pipe 61. The outer cover 64 is formed with an accommodating cavity with an opening at one side. The filter is provided in the accommodating cavity, and the open side of the accommodating cavity is connected to the water heater body 60 to seal the accommodating cavity. The filter is configured to filter the water input into the water heater body 60 through the water inlet pipe 61.

A joint 65 can be provided between the water inlet pipe 61 and the filter, and the joint 65 has an input port 651 and an output port 652, and the input port 651 and the output port 652 are not coaxial. The joint 65 is provided on the water outlet pipe, and the input port 651 is connected to the water outlet pipe. The joint 65 is a hollow tubular structure, and the joint 65 is configured to connect the filter and the water inlet pipe 61.

The input port 651 and the output port 652 are the liquid inlet and outlet of the joint 65. Since the input port 651 and the output port 652 are not coaxial, during installation, the joint 65 with different angles can be selected according to the water inlet pipe 61 of the water heater, to adjust the water inlet or outlet angle of the filter through the joint 65. The angle of the filter can be adjusted according to the design of the water inlet pipe 61 of the water heater to install the water heater at different angles and orientations, and the external piping of the water heater body 60 can be concealed.

In this embodiment, the projection of the axis of the input port 651 of the joint 65 on the horizontal plane is perpendicular to or intersects with the projection of the axis of the output port 652 of the joint 65 on the horizontal plane, to change the water flow direction of the water heater. The axis of the input port 651 and the axis of the output port 652 may be perpendicular to each other, and the joint 65 as a whole is bent at 90° in the water inlet and outlet directions, and other angles may also be selected.

The water heater body 60 has a filter bottle. The inside of the filter bottle can also include other structures, such as an inner liner 63, and a heating component, a thermometer provided inside the inner liner 63. A thermal insulation layer can also be provided between the filter bottle and the inner liner 63, and the installation method can refer to the prior art, and will not be repeated herein. The water inlet pipe 61 is connected to the inner liner 63 for inputting cold water into the inner liner 63. The water outlet pipe 62 is connected to the inner liner 63 for outputting the heated water to the outside of the water heater body 60.

The outer cover 64 has an inwardly concave portion to form the accommodating cavity. Since the filter is provided in the accommodating cavity, the filter is provided in the water inlet pipe 61, the outer cover 64 covers the outside of the filter, the filter cannot be seen from the appearance of the water heater, to help improve the aesthetics of the overall structure and the safety of using the water heater. Since the filter is provided outside the water heater, the filter does not occupy the inner space of the water heater, to conveniently expand the capacity of the inner liner 63 of the water heater and increase the volume of the water heater.

The filter bottle of the filter can partially extend out of the outer cover 64, and the user can directly observe the use state of the filter medium outside the filter. In order to facilitate observation, a visible area can be provided on the filter bottle. The filter bottle can be made of transparent material, or the filter bottle can be made of partially transparent material. When the filter bottle is detachably connected to the mounting cap, the user can directly observe the use state of the filter medium from the outside of the housing 64, and directly replace the filter medium without disassembling the water heater body 60.

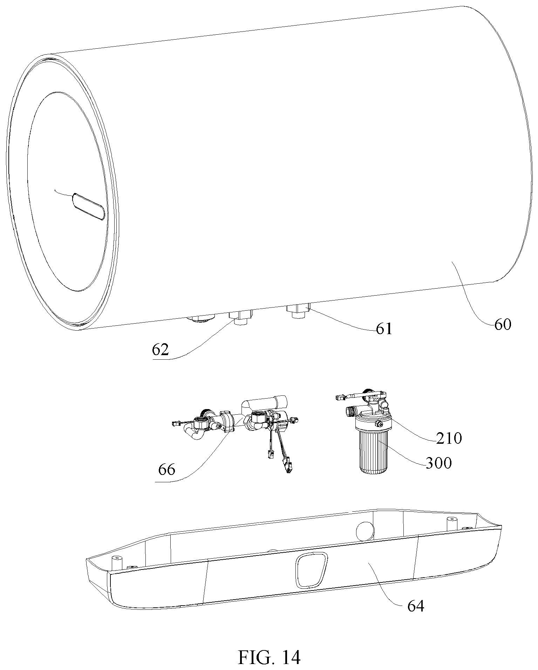

As shown in FIG. 14, in order to conveniently control the temperature of the water heater at the water outlet, a thermostatic valve 66 can be provided in the outer cover 64, and an electronic thermostatic valve 66 can be used to accurately control the temperature of the water heater at the water outlet. The purified water filtered by the filter enters the water inlet pipe 61 of the water heater body 60 and the cold water pipe of the thermostatic valve 66. The hot water produced by the heating of the water heater enters the hot water pipe of the thermostatic valve 66.

When the water heater is provided with the temperature measuring element, the cold water temperature of the thermostatic valve 66 can be detected in real time. A temperature sensor is provided on the hot water inlet of the thermostatic valve 66, to accurately detect the temperature of cold water and hot water input to the thermostatic valve 66, and facilitate accurate control of the temperature of the thermostatic valve 66 at the water outlet.

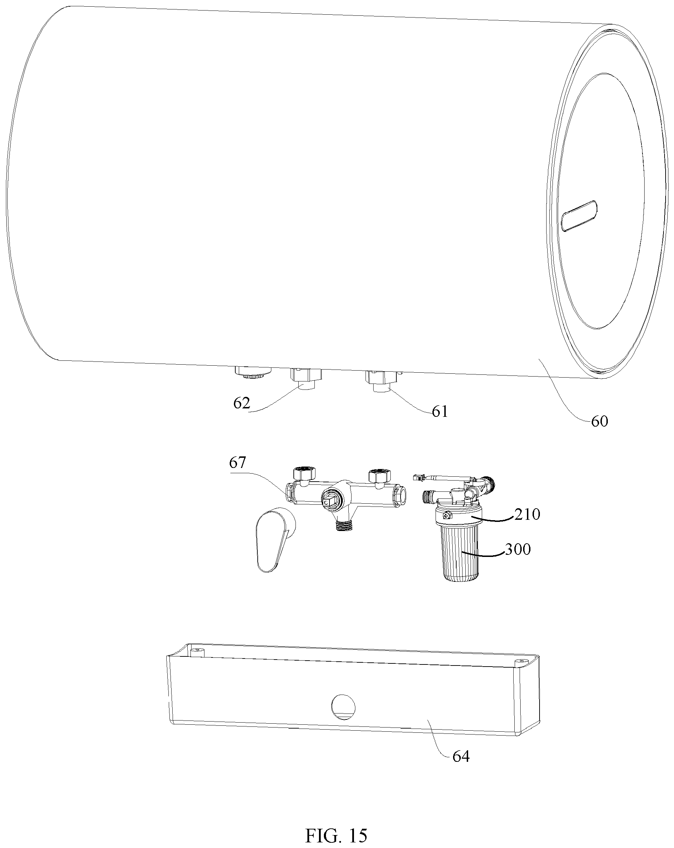

As shown in FIG. 15, in order to facilitate the user's operation, a water mixing valve 67 can be provided in the outer cover 64. The purified water filtered by the filter enters into the water inlet pipe 61 of the water heater, and into the cold water pipe of the water mixing valve 67. The hot water generated by the heating of the water heater body 60 enters the hot water pipe of the water mixing valve 67, and is mixed and output through the water mixing valve 67 to form warm water.

## Claims

1. A filter (100), comprising:
a filter bottle (300), a cavity being formed inside the filter bottle (300), the filter bottle (300) being provided with a water inlet pipe (220) and a water outlet pipe (230) which are in communication with the cavity;
a filter element assembly (400) provided in the cavity, the filter element assembly (400) being configured to filter raw water, inputted through the water inlet pipe (220), to generate purified water, and the purified water being outputted through the water outlet pipe (230);
a sensor component comprising
a flow measurement element provided in the water inlet pipe (220) and/or the water outlet pipe (230), and
a temperature measurement element provided in the water inlet pipe (220) and/or the water outlet pipe (230), **characterized by** that
the flow measurement element is a magnetic rotor configured to generate a magnetic field signal that varies with a flow rate of water.

2. The filter (100) of claim 1, wherein the magnetic rotor comprises:
an outer frame provided in the water inlet pipe (220) and/or the water outlet pipe (230); and
an impeller rotatably arranged in the outer frame,
wherein the impeller is configured to be driven by water flow to rotate, and to generate the magnetic field signal that varies with the flow rate of the water,

3. The filter (100) of claim 1, wherein the flow measurement element further comprises:
a Hall element provided on the filter bottle (300),
wherein the Hall element corresponds to the magnetic rotor, and is configured for receiving the magnetic field signal from the magnetic rotor.

4. The filter (100) of claim 3, wherein the Hall element is detachably provided on the filter bottle (300).

5. The filter (100) of any one of claims 1-4, wherein:
the filter element assembly (400) is hollow, and a first water filtering cavity (700) is formed inside the filter element assembly (400);
a second water inlet cavity (600) is formed between an outer wall of the filter element assembly (400) and an inner wall of the cavity;
the water inlet pipe (220) is in communication with the second water inlet cavity (600), the water outlet pipe (230) is in communication with the first water filtering cavity (700), the raw water in the second water inlet cavity (600) is filtered by the filter element assembly (400) and then flows into the first water filtering cavity (700); or
the water inlet pipe (220) is in communication with the first water filtering cavity (700), the water outlet pipe (230) is in communication with the second water inlet cavity (600), the raw water in the first water filtering cavity (700) is filtered by the filter element assembly (400) and then flows into the second water inlet cavity (600).

6. The filter (100) of claim 5, wherein the filter element assembly (400) comprises:
a filter element frame (410) provided in the cavity and fixed to an inner wall of the filter bottle (300), and the filter element frame (410) being hollow,
a filter medium provided on an inner surface and/or an outer surface of the filter element frame (410) and configured to filter the raw water to generate the purified water.

7. The filter (100) of claim 6, wherein: an end of the filter bottle (300) has an opening; a mounting cap (210) is provided at the opening of the filter bottle (300) to close the cavity; the water inlet pipe (220) and the water outlet pipe (230) are provided on the mounting cap (210); one end of the filter element frame (410) is connected to the mounting cap (210), the other end of the filter element frame (410) abuts on an end of the filter bottle (300) away from the mounting cap (210).

8. The filter (100) of claim 7, wherein a mesh cover (500) is provided between the filter element frame (410) and the mounting cap (210), wherein an end of the filter element frame (410) is fixed to the mesh cover (500), wherein the mesh cover (500) is provided with filter holes for communicating with the water filtering cavity (700), wherein a filter grid is provided outside the mesh cover (500), wherein the filter grid extends into the water inlet cavity (600) and abuts an inner wall of the filter bottle (300), and wherein a water flow channel for communicating with the water inlet cavity (600) is formed between adjacent filter grids.

9. The filter (100) of claim 5, wherein the first water filtering cavity (700) and/or the second water inlet cavity (600) is provided with a magnetizing element (30).

10. A water way control system, comprising a processor, a water way opening and closing actuator and a filter (100) of any one of claims 1 to 9, wherein the processor is electrically connected to the water way opening and closing actuator and to the filter (100) respectively.

11. A water heater, comprising a filter (100) of any one of claims 1 to 9 or a water way control system of claim 10.

## Patentansprüche

1. Filter (100), umfassend:
eine Filterflasche (300), wobei in der Filterflasche (300) ein Hohlraum ausgebildet ist und die Filterflasche (300) mit einem Wassereinlassrohr (220) und einem Wasserauslassrohr (230) versehen ist, die mit dem Hohlraum in Verbindung stehen;
eine Filterelementanordnung (400), die in dem Hohlraum vorgesehen ist, wobei die Filterelementanordnung (400) so konfiguriert ist, dass sie durch das Wassereinlassrohr (220) eingeführtes Rohwasser filtert, um gereinigtes Wasser zu erzeugen, und wobei das gereinigte Wasser durch das Wasserauslassrohr (230) ausgelassen wird;
eine Sensorkomponente umfassend
ein Durchflussmesselement, das in dem Wassereinlassrohr (220) und/oder dem Wasserauslassrohr (230) vorgesehen ist, und
ein Temperaturmesselement, das in dem Wassereinlassrohr (220) und/oder dem Wasserauslassrohr (230) vorgesehen ist, **dadurch gekennzeichnet, dass**
das Durchflussmesselement ein Magnetrotor ist, der so konfiguriert ist, dass er ein Magnetfeldsignal erzeugt, das sich mit einer Durchflussrate des Wassers ändert.

2. Filter (100) gemäß Anspruch 1, wobei der Magnetrotor Folgendes umfasst:
einen Außenrahmen, der in dem Wassereinlassrohr (220) und/oder dem Wasserauslassrohr (230) vorgesehen ist; und
ein in dem Außenrahmen drehbar angeordnetes Laufrad,
wobei das Laufrad so konfiguriert ist, dass es durch den Wasserfluss angetrieben wird, um sich zu drehen und das Magnetfeldsignal zu erzeugen, das sich mit der Durchflussrate des Wassers ändert,

3. Filter (100) gemäß Anspruch 1, wobei das Durchflussmesselement ferner Folgendes umfasst:
ein Hall-Element, das an der Filterflasche (300) vorgesehen ist,
wobei das Hall-Element dem Magnetrotor entspricht und so konfiguriert ist, dass es das Magnetfeldsignal vom Magnetrotor empfängt.

4. Filter (100) gemäß Anspruch 3, wobei das Hall-Element abnehmbar an der Filterflasche (300) vorgesehen ist.

5. Filter (100) gemäß einem der Ansprüche 1 bis 4, wobei:
die Filterelementanordnung (400) hohl ist und ein erster Wasserfilterhohlraum (700) innerhalb der Filterelementanordnung (400) ausgebildet ist;
ein zweiter Wassereinlasshohlraum (600) zwischen einer Außenwand der Filterelementanordnung (400) und einer Innenwand des Hohlraums ausgebildet ist;
das Wassereinlassrohr (220) mit dem zweiten Wassereinlasshohlraum (600) in Verbindung steht, das Wasserauslassrohr (230) mit dem ersten Wasserfilterhohlraum (700) in Verbindung steht, das Rohwasser im zweiten Wassereinlasshohlraum (600) durch die Filterelementanordnung (400) gefiltert wird und dann in den ersten Wasserfilterhohlraum (700) fließt; oder
das Wassereinlassrohr (220) mit dem ersten Wasserfilterhohlraum (700) in Verbindung steht, das Wasserauslassrohr (230) mit dem zweiten Wassereinlasshohlraum (600) in Verbindung steht, das Rohwasser in dem ersten Wasserfilterhohlraum (700) durch die Filterelementanordnung (400) gefiltert wird und dann in den zweiten Wassereinlasshohlraum (600) fließt.

6. Filter (100) gemäß Anspruch 5, wobei die Filterelementanordnung (400) Folgendes umfasst:
einen Filterelementrahmen (410), der in dem Hohlraum vorgesehen und an einer Innenwand der Filterflasche (300) befestigt ist, und wobei der Filterelementrahmen (410) hohl ist,
ein Filtermedium, das an einer Innenfläche und/oder einer Außenfläche des Filterelementrahmens (410) vorgesehen und so konfiguriert ist, dass es das Rohwasser filtert, um das gereinigte Wasser zu erzeugen.

7. Filter (100) gemäß Anspruch 6, wobei: ein Ende der Filterflasche (300) eine Öffnung aufweist; eine Befestigungskappe (210) an der Öffnung der Filterflasche (300) vorgesehen ist, um den Hohlraum zu verschließen; das Wassereinlassrohr (220) und das Wasserauslassrohr (230) an der Befestigungskappe (210) vorgesehen sind; ein Ende des Filterelementrahmens (410) mit der Befestigungskappe (210) verbunden ist, das andere Ende des Filterelementrahmens (410) an einem Ende der Filterflasche (300) anliegt, das von der Befestigungskappe (210) entfernt ist.

8. Filter (100) gemäß Anspruch 7, wobei zwischen dem Filterelementrahmen (410) und der Befestigungskappe (210) eine Netzabdeckung (500) vorgesehen ist, wobei ein Ende des Filterelementrahmens (410) an der Netzabdeckung (500) befestigt ist, wobei die Netzabdeckung (500) mit Filterlöchern versehen ist, um mit dem Wasserfilterhohlraum (700) in Verbindung zu stehen, wobei außerhalb der Netzabdeckung (500) ein Filtergitter vorgesehen ist, wobei sich das Filtergitter in den Wassereinlasshohlraum (600) erstreckt und an einer Innenwand der Filterflasche (300) anliegt, und wobei zwischen benachbarten Filtergittern ein Wasserströmungskanal zur Verbindung mit dem Wassereinlasshohlraum (600) ausgebildet ist.

9. Filter (100) gemäß Anspruch 5, wobei der erste Wasserfilterhohlraum (700) und/oder der zweite Wassereinlasshohlraum (600) mit einem Magnetisierungselement (30) versehen ist.

10. Wasserweg-Steuersystem, umfassend einen Prozessor, einen Wasserweg-Öffnungs- und -Schließaktuator und einen Filter (100) gemäß einem der Ansprüche 1 bis 9, wobei der Prozessor elektrisch mit dem Wasserweg-Öffnungs- und - Schließaktuator bzw. mit dem Filter (100) verbunden ist.

11. Warmwasserbereiter, umfassend einen Filter (100) gemäß einem der Ansprüche 1 bis 9 oder ein Wasserweg-Steuersystem gemäß Anspruch 10.

## Revendications

1. Filtre (100) comprenant :
une bouteille filtrante (300), une cavité étant formée à l'intérieur de la bouteille filtrante (300), la bouteille filtrante (300) étant pourvue d'un tuyau d'entrée d'eau (220) et d'un tuyau de sortie d'eau (230) qui communiquent avec la cavité ;
un ensemble d'éléments filtrants (400) prévu dans la cavité, l'ensemble d'éléments filtrants (400) étant configuré pour filtrer de l'eau brute, introduite par le tuyau d'entrée d'eau (220), afin de produire de l'eau purifiée, et l'eau purifiée étant évacuée par le tuyau de sortie d'eau (230) ;
un composant capteur comprenant
un élément de mesure de débit prévu dans le tuyau d'entrée d'eau (220) et/ou le tuyau de sortie d'eau (230), et
un élément de mesure de température prévu dans le tuyau d'entrée d'eau (220) et/ou le tuyau de sortie d'eau (230), **caractérisé en ce que**
l'élément de mesure de débit est un rotor magnétique configuré pour générer un signal de champ magnétique qui varie en fonction du débit d'eau.

2. Le filtre (100) selon la revendication 1, dans lequel le rotor magnétique comprend :
un cadre extérieur prévu dans le tuyau d'entrée d'eau (220) et/ou le tuyau de sortie d'eau (230) ; et
une turbine disposée de manière rotative dans le cadre extérieur,
dans lequel la turbine est configurée pour être entraînée en rotation par le débit d'eau et pour générer le signal de champ magnétique qui varie en fonction du débit d'eau,

3. Le filtre (100) selon la revendication 1, dans lequel l'élément de mesure de débit comprend en outre :
un élément Hall prévu sur la bouteille filtrante (300),
dans lequel l'élément Hall correspond au rotor magnétique et est configuré pour recevoir le signal de champ magnétique provenant du rotor magnétique.

4. Le filtre (100) selon la revendication 3, dans lequel l'élément Hall est prévu de manière amovible sur la bouteille filtrante (300).

5. Le filtre (100) selon l'une quelconque des revendications 1 à 4, dans lequel :
l'ensemble d'éléments filtrants (400) est creux, et une première cavité de filtration d'eau (700) est formée à l'intérieur de l'ensemble d'éléments filtrants (400) ;
une deuxième cavité d'entrée d'eau (600) est formée entre une paroi extérieure de l'ensemble d'éléments filtrants (400) et une paroi intérieure de la cavité ;
le tuyau d'entrée d'eau (220) est en communication avec la deuxième cavité d'entrée d'eau (600), le tuyau de sortie d'eau (230) est en communication avec la première cavité de filtration d'eau (700), l'eau brute dans la deuxième cavité d'entrée d'eau (600) est filtrée par l'ensemble d'éléments filtrants (400) puis s'écoule dans la première cavité de filtration d'eau (700) ; ou
le tuyau d'entrée d'eau (220) est en communication avec la première cavité de filtration d'eau (700), le tuyau de sortie d'eau (230) est en communication avec la deuxième cavité d'entrée d'eau (600), l'eau brute dans la première cavité de filtration d'eau (700) est filtrée par l'ensemble d'éléments filtrants (400) puis s'écoule dans la deuxième cavité d'entrée d'eau (600).

6. Le filtre (100) selon la revendication 5, dans lequel l'ensemble d'éléments filtrants (400) comprend :
un cadre d'élément filtrant (410) prévu dans la cavité et fixé à une paroi intérieure de la bouteille filtrante (300), le cadre d'élément filtrant (410) étant creux,
un milieu filtrant prévu sur une surface intérieure et/ou une surface extérieure du cadre d'élément filtrant (410) et configuré pour filtrer l'eau brute afin de générer l'eau purifiée.

7. Le filtre (100) selon la revendication 6, dans lequel : une extrémité de la bouteille filtrante (300) comporte une ouverture ; un capuchon de montage (210) est prévu au niveau de l'ouverture de la bouteille filtrante (300) pour fermer la cavité ; le tuyau d'entrée d'eau (220) et le tuyau de sortie d'eau (230) sont prévus sur le capuchon de montage (210) ; une extrémité du cadre de l'élément filtrant (410) est reliée au capuchon de montage (210), l'autre extrémité du cadre de l'élément filtrant (410) bute contre une extrémité de la bouteille filtrante (300) éloignée du capuchon de montage (210).

8. Le filtre (100) selon la revendication 7, dans lequel un couvercle grillagé (500) est prévu entre le cadre d'élément filtrant (410) et le capuchon de montage (210), dans lequel une extrémité du cadre d'élément filtrant (410) est fixée au couvercle grillagé (500), dans lequel le couvercle grillagé (500) est pourvu de trous filtrants pour communiquer avec la cavité de filtration d'eau (700), dans lequel une grille de filtration est prévue à l'extérieur du couvercle grillagé (500), dans lequel la grille de filtration s'étend dans la cavité d'entrée d'eau (600) et vient en butée contre une paroi intérieure de la bouteille filtrante (300), et dans lequel un canal d'écoulement d'eau destiné à communiquer avec la cavité d'entrée d'eau (600) est formé entre des grilles de filtration adjacentes.

9. Le filtre (100) selon la revendication 5, dans lequel la première cavité de filtration d'eau (700) et/ou la deuxième cavité d'entrée d'eau (600) est pourvue d'un élément magnétisant (30).

10. Système de commande de passage d'eau, comprenant un processeur, un actionneur d'ouverture et de fermeture de passage d'eau et un filtre (100) selon l'une quelconque des revendications 1 à 9, dans lequel le processeur est connecté électriquement à l'actionneur d'ouverture et de fermeture de passage d'eau et au filtre (100) respectivement.

11. Chauffe-eau, comprenant un filtre (100) selon l'une quelconque des revendications 1 à 9 ou un système de commande de passage d'eau selon la revendication 10.
